# EUROPEAN PATENT APPLICATION

(11) **EP 3 213 901 A1**
(43) Date of publication of application: **06.09.2017**
(21) Application number: 15853760.5
(22) Date of filing: 17.09.2015
(51) Int. Cl.: B29C 49/46, B29C 49/06

(54) **PREFORM FOR LIQUID BLOW MOULDING**

(30) Priority: 30.10.2014 JP 2014221477; 31.07.2015 JP 2015151656
(71) Applicant: Discma AG, 6331 Hünenberg (CH)
(72) Inventor: TANAKA, Toshimasa, Tokyo 136-8531 (JP); TABATA, Shinichi, Isehara-shi Kanagawa 259-1103 (JP); OKUYAMA, Yuichi, Isehara-shi Kanagawa 259-1103 (JP)
(74) Representative: Lavoix
(86) International application number: PCT/JP2015/004773
(87) International publication number: WO 2016/067512

(57) **Abstract**

Provided is a preform which is manufactured from polypropylene or high density polyethylene and with which a container of a desired shape can be precisely molded by liquid blow molding. When formed from the polypropylene into a closed-bottom cylinder shape comprising an opening section (2) and a body section (3), the preform (1) for liquid blow molding is molded, by liquid blow molding, into the container by stretching the body section (3) in the axial direction by a stretch ratio of 2.25-4.34 inclusive and in the radial direction by a stretch ratio of 1.95-5.00 inclusive. Furthermore, when formed from the high density polyethylene into a closed-bottom cylinder shape comprising an opening section (2) and a body section (3), the preform (1) for liquid blow molding is molded, by liquid blow molding, into the container by stretching the body section (3) in the axial direction by a stretch ratio of 1.69-2.50 inclusive and in the radial direction by a stretch ratio of 2.26-5.07 inclusive.

## Description

### Technical Field

The present invention relates to a preform for liquid blow molding formed into a closed-bottom cylinder provided with an opening section and a body section from polypropylene or high density polyethylene then molded (formed) into a container by liquid blow molding.

### Background Art

As a container for beverages, foods, cosmetics and the like, those manufactured of polypropylene (PP) or high density polyethylene (HDPE) are often used.

Generally, such container is molded into a predefined shape by heating a preform formed into a closed-bottom cylinder which integrally comprises a cylindrical opening section and a test tube-like body section by injection molding or compression molding to a temperature until its stretch effect is exhibited and in such condition stretching it in the axial direction and in the radial direction while using a stretching rod and supplying pressurized air into the preform (see patent document 1, for example).

### Prior Art Documents

### Patent Documents

Patent Document 1: Japanese Unexamined Patent Application Publication No. 2014-88004

### Summary of the Invention

### Problem to be Solved by the Invention

However, while molding a conventional preform manufactured from polypropylene or high density polyethylene into a predefined shape by air blow molding, such tolerance of a stretch ratio in the axial direction and radial direction is narrow, and there is a problem in that it is common for a container with a desired shape to not be precisely molded.

To counter this, liquid blow molding is known wherein a preform manufactured from polypropylene or high density polyethylene is supplied with pressurized liquid, instead of pressurized air, for molding the preform into a container in a predefined shape, but when such preforms are molded into a container by liquid blow molding, it is not known to what extent the preform may be stretched by the stretching ratio to obtain a preferable container.

In the light of the above problem, an object of the present invention is to provide a preform which is manufactured from polypropylene with which a container of a desired shape can be precisely molded by liquid blow molding. Further, another object of the present invention is to provide a preform which is manufactured from high density polyethylene with which a container of a desired shape can be precisely molded by liquid blow molding.

### Means to Resolve the Problems

The preform for liquid blow molding of the present invention is a preform for liquid blow molding formed into a closed-bottom cylinder provided with an opening section and a body section from the polypropylene, wherein the body section is molded into a container by liquid blow molding by being stretched in the axial direction at a stretch ratio of not less than 2.25 and not more than 4.34 and in the radial direction by a stretch ratio of not less than 1.95 and not more than 5.00.

It is preferable that the polypropylene preform for liquid blow molding of the present invention of the above composition have a stretch ratio in the radial direction of the body section by liquid blow molding between 1.95 or more and less than 2.48.

It is preferable that the polypropylene preform for liquid blow molding of the present invention of the above composition have a stretch ratio in the radial direction of the body section by liquid blow molding between more than 3.70 and 5.00 or less.

The preform for liquid blow molding of the present invention is a preform for liquid blow molding shaped into a closed-bottom cylinder provided with an opening section and a body section from the high density polyethylene, wherein the body section is molded into a container by liquid blow molding by being stretched in the axial direction at a stretch ratio of not less than 1.69 and not more than 2.50 and in the radial direction by a stretch ratio of not less than 2.26 and not more than 5.07.

It is preferable that the high density polyethylene preform for liquid blow molding of the present invention of the above composition have a surface area stretch ratio (PSR) by liquid blow molding of 10.3 or less.

### Effect of the Invention

With the present invention, a polypropylene preform can be provided that can precisely mold a container of a desired shape by liquid blow molding.

Further, with the present invention, a high density polyethylene preform can be provided that can precisely mold a container of a desired shape by liquid blow molding.

### Brief Description of the Drawings

FIG. 1 is a half cross-sectional view of the preform for liquid blow molding as one embodiment of the present invention as viewed from the side.
FIG. 2 is a plot diagram showing experimental results for when the polypropylene preform in Table 1 is molded into a container by liquid blow molding.
FIG. 3 is a plot diagram showing experimental results for when the polypropylene preform in Table 1 is molded into a container by air blow molding.
FIG. 4 is a plot diagram showing experimental results for when the high density polyethylene preform in Table 1 is molded into a container by liquid blow molding.
FIG. 5 is a plot diagram showing experimental results for when the high density polyethylene preform in Table 1 is molded into a container by air blow molding.
FIG. 6 is a plot diagram showing experimental results for when the high density polyethylene preform in Table 2 is molded into a container by liquid blow molding.

### Embodiments of the Invention

Embodiments of the invention are described below in detail with reference to figures.

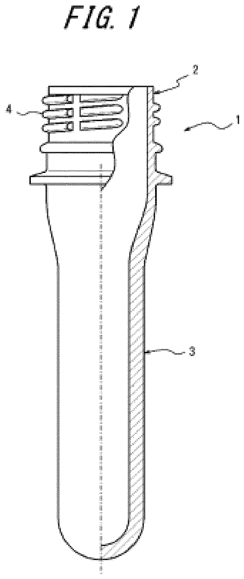

The preform 1 for liquid blow molding which is one embodiment of the present invention shown in FIG. 1 is made of polypropylene (hereinafter called "PP") molded by injection molding and is formed into a closed-bottom cylinder provided with an opening section 2 and a body section 3. This preform 1 is not limited to being formed by injection molding of PP, and can be that shaped by molding PP into a predetermined shape by, for example, compression molding and extrusion blow molding. The opening section 2 of the preform 1 is formed in a cylinder shape, and a male screw part 4 is integrally provided on the outer peripheral surface thereof. The body section 3 is formed in a test tube shape having a circular cross-section extending in the axial direction and is provided coaxially and integrally with the opening section 2 at the lower part of the opening section 2.

This preform 1 is used for liquid blow molding, and the body section 3 is stretched in the axial and radial directions thereof and molded into a container of a predefined shape as a pressurized liquid is supplied to the body section 3 through the opening section 2 in the liquid blow molding. That is, the preform 1 is mounted in the cavity of the mold for blow molding, not shown in the figure for the body section 3, and is molded into a container in a predefined shape along with the inner surface of the cavity of the mold as the body section 3 is stretched in the axial direction and in the radial direction by the pressurized liquid supplied through the opening section 2.

It should be noted that it is preferable that the liquid used in liquid blow molding being supplied into the preform 1 is the liquid that is finally filled into the container as a manufactured product such as a beverage, cosmetic, chemical, detergent, body soap, and the like. By this, the omission of the filling process of the liquid into the molded container allows the productivity to be increased.

When liquid blow molding, it is preferable that the body section 3 of the preform 1 is heated in advance by a heater and the like to a temperature until its stretching effect is exhibited. Furthermore, when liquid blow molding, a configuration may be provided so that a stretching rod can be inserted inside the body section 3 through the opening section 2 to assist in stretching the body section 3 in the axial direction by the stretching rod. It should be noted that, when heating the preform 1, it is possible to adopt a molding process by a method, considering productivity, such as a method utilizing residual heat at the time of the preform 1 molding, in other words, a hot preform method.

The preform 1 of the present invention is such that the body section 3 is molded into a container of a predefined shape by liquid blow molding by being stretched in the axial direction at a stretch ratio of not less than 2.25 and not more than 4.34 and in the radial direction by a stretch ratio of not less than 1.95 and not more than 5.00. A more preferable range of the stretch ratio in the radial direction of the body section 3 of the preform 1 of the present invention is a range between 1.95 or more and less than 2.48 or a range between more than 3.70 and 5.00 or less.

The stretch ratio of the preform 1 in the axial direction and radial direction in liquid blow molding may be set to the above range by altering the various ratios of the axial dimension and the radial dimension (inner diameter) of the cavity of the mold for blow molding to the axial dimension and the radial dimension (outer diameter) of the body section 3 of the preform 1 or by altering the various ratios of the axial dimension and the radial dimension (outer diameter) of the body section 3 of the preform 1 to the axial dimension and the radial dimension (inner diameter) of the cavity of the mold for blow molding.

The preform 1 of the present invention fully traces the inner surface of the cavity of the mold by the body section 3 being stretched in the axial direction and in the radial direction at the stretch ratio by liquid blow molding, and it is precisely molded into a container of a desired shape that possesses a desired capacity, height, and the like, without causing shrinking that occurs after (1 day later, for example) taking from the mold to a container after molding or causing a rupture in the container at the time of molding.

The preform of the present invention can be made of high density polyethylene (hereinafter called "HDPE"). Also in this case, in likewise manner to the PP preform 1 shown in FIG. 1, the preform is formed into a closed-bottom cylinder provided with an opening section and a body section and molded into a container by liquid blow molding.

This HDPE preform is such that the body section is molded into a container of a predefined shape by liquid blow molding by being stretched in the axial direction at a stretch ratio of not less than 1.69 and not more than 2.50 and in the radial direction by a stretch ratio of not less than 2.26 and not more than 5.07. Furthermore, it is preferable that the stretch ratio of the surface area (PSR), which is the product of the stretch ratio in the axil direction (ASR) and the stretch ratio in the radial direction (HSR), is not more than 10.3. Moreover, in likewise manner to the PP preform 1, the HDPE preform fully traces the inner surface of the cavity of the mold such that the body section is stretched in the axial direction and in the radial direction at the stretch ratio range by liquid blow molding, and it is precisely molded into a container of a desired shape that possesses a desired capacity, height, and the like, without causing shrinking on the container after molding or causing a rupture in the container at the time of molding.

It should be noted that, also in liquid blow molding of the HDPE preform, the stretch ratio in the axial direction and radial direction is possible to be set to the range by altering the various ratios of the axial dimension and the radial dimension (inner diameter) of the cavity of the mold for blow molding to the axial dimension and the radial dimension (outer diameter) of the body section of the preform or by altering the various ratios of the axial dimension and the radial dimension (outer diameter) of the body section of the preform to the axial dimension and the radial dimension (inner diameter) of the cavity of the mold for blow molding.

For example, the stretch ratio of the body section of the HDPE preform in the radial direction in liquid blow molding may be set to a range between not less than 2.26 and not more than 4.50 or a range between not less than 4.30 and not more than 5.07.

With regard to each preform, preform formed of PP and preform formed of HDPE, in order to examine the appropriate stretch ratios in the axial direction and in the radial direction of the body section of the preform that are possible for these preforms to precisely mold by liquid blow molding into a container of a desired shape, three types of preforms (No. 1 to 3) whose body section shape differs to each other are formed by PP and HDPE for each, an experiment has been conducted to investigate the effects of the stretch ratio in the axial direction and the radial direction on molding quality of the container obtained by liquid blow molding of the preform by liquid blow molding of these preforms using seven types of molds for blow molding, whose axial dimension and the radial dimension of the cavity differ to each other, as altering the stretch ratio in the axial direction (ASR) and the stretch ratio in the radial direction (HSR). Table 1 shows the results. It should be noted that, as comparison, Table 1 together indicates a determination of the molding quality of the container in a case where the preforms are each molded into a container by air blow molding under the same conditions.

**[Table 1]**

| No | Stretch ratio | | | PP | | HDPE | |
|---|---|---|---|---|---|---|---|
| | ASR | HSR | PSR | Liquid blow | Air below | Liquid blow | Air blow |
| 1 | 1.50 | 3.50 | 5.25 | × | × | × | × |
| | 2.00 | 2.75 | 5.50 | × | × | ○ | × |
| | 2.00 | 4.50 | 9.00 | × | × | ○ | × |
| | 275 | 3.50 | 9.63 | ○ | × | × | × |
| | 2.50 | 4.00 | 10.00 | ○ | × | ○ | × |
| | 3.00 | 5.00 | 15.00 | ○ | × | × | × |
| | 3.50 | 4.50 | 15.75 | ○ | × | × | ○ |
| 2 | 2.37 | 2.48 | 5.86 | ○ | ○ | ○ | ○ |
| | 3.16 | 1.95 | 6.14 | ○ | × | ○ | × |
| | 3.16 | 3.19 | 10.05 | ○ | ○ | × | × |
| | 4.34 | 2.48 | 10.75 | ○ | ○ | × | × |
| | 3.94 | 2.83 | 11.17 | ○ | ○ | × | × |
| | 4.73 | 3.54 | 16.76 | × | x | × | × |
| | 5.52 | 3.19 | 17.59 | × | x | × | × |
| 3 | 1.69 | 2.88 | 4.87 | × | ○ | ○ | × |
| | 2.25 | 2.26 | 5.10 | ○ | × | ○ | × |
| | 2.25 | 3.70 | 8.34 | ○ | × | ○ | × |
| | 3.10 | 288 | 8.92 | ○ | ○ | × | × |
| | 2.82 | 3.29 | 9.27 | ○ | × | ○ | × |
| | 3.38 | 4.11 | 13.90 | ○ | × | × | ○ |
| | 3.94 | 3.70 | 14.60 | ○ | ○ | × | ○ |

In this experiment, the molding condition of the blow molded containers is determined based on the reduction rate of the content amount (shrinkage rate of the container after molding) and the reduction rate of the height of the container after 1 day from the molding of the container (change over time). It should be noted that, in the Table 1, ○ indicates good formability (the reduction rate with respect to the initial content amount is within 5%, and the reduction rate with respect to the initial container height is within 1%) and × indicates bad formability. Furthermore, in a case where the preform ruptures and fails to be molded into a container at the time of blow molding, the molding quality is determined as × . In addition to the stretch ratio in the axial direction (ASR) and the stretch ratio in the radial direction (HSR), Table 1 indicates the stretch ratio of the surface area of the body section of the preform (PSR) as reference.

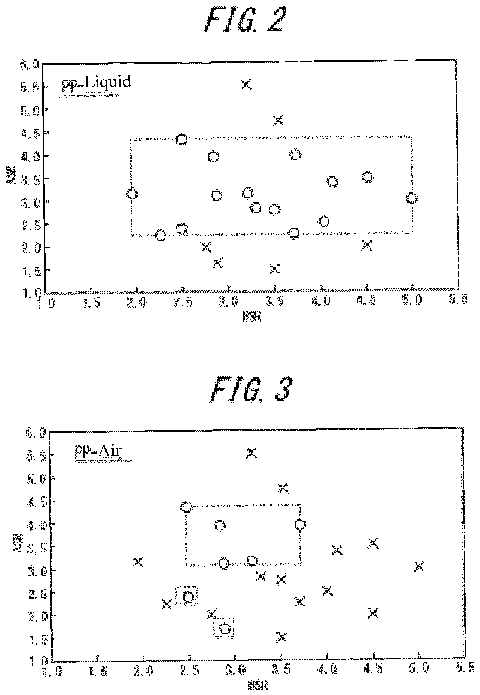

FIG. 2 is a plot diagram showing experimental results for when the PP preform in Table 1 is molded into a container by liquid blow molding, and FIG. 3 is a plot diagram showing experimental results for when the PP preform in Table 1 is molded into a container by air blow molding.

From the experimental results in Table 1 and FIG. 2, it is seen that when the PP preform is molded into a container of a predefined shape by liquid blow molding, the preform can be molded into a container with good formability by liquid blow molding by setting the stretch ratio in the axial direction and in the radial direction so that the stretch ratio in the axial direction of the body section will be not less than 2.25 and not more than 4.34 and the stretch ratio in the radial direction of the body section will be not less than 1.95 and not more than 5.00.

Conversely, when the PP preform is molded into a container of a predefined shape by air blow molding, compared liquid blowing, it is seen that the formability of the container can be secured only at the stretch ratio in a narrower range. That is, it is seen that, when the PP preform is molded into a container of a predefined shape by liquid blow molding, molding of the container with good formability is possible in the range of the stretch ratio where the stretch ratio in the axial direction of the body section will be not less than 2.25 and not more than 4.34 and the stretch ratio in the radial direction of the body section will be not less than 1.95 and will be less than 2.48, and the stretch ratio in the axial direction of the body section will be not less than 2.25 and not more than 4.34 and the stretch ratio in the radial direction of the body section will be more than 3.70 and will not be more than 5.00, which are the ranges where formability of a container cannot be secured by air blow molding.

Furthermore, from Table 1, when the PP preform is molded into a container of a predefined shape by air blow molding, particularly No. 1 preform cannot be molded at all, but when the PP preform is molded into a container of a predefined shape by liquid blow molding, it is seen that it is possible that the preform is certainly molded into a container with good formability as the stretch ratio in the axial direction and in the radial direction of the preform is set where the stretch ratio of the surface area (PSR) will be in the range between 9.27 and 16.76.

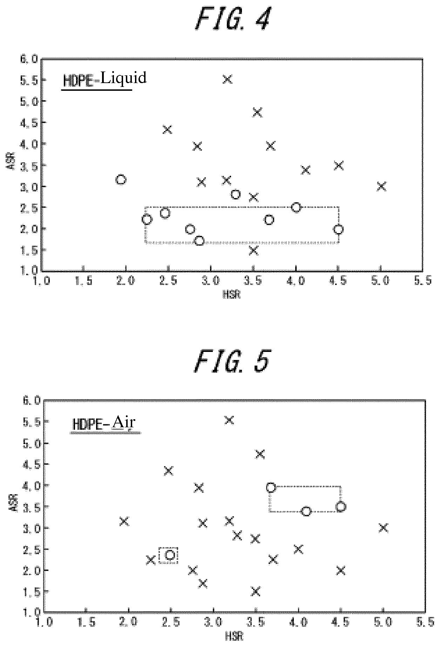

FIG. 4 is a plot diagram showing experimental results for when the high density polyethylene preform in Table 1 is molded into a container by liquid blow molding, and FIG. 5 is a plot diagram showing experimental results for when the high density polyethylene preform in Table 1 is molded into a container by air blow molding.

From the experimental results in Table 1 and FIG. 4, it is seen that when the HDPE preform is molded into a container of a predefined shape by liquid blow molding, the preform can be molded into a container with good formability by liquid blow molding by setting the stretch ratio in the axial direction and in the radial direction so that the stretch ratio in the axial direction of the body section will be not less than 1.69 and not more than 2.50 and the stretch ratio in the radial direction of the body section will be not less than 2.26 and not more than 4.50.

Conversely, when the HDPE preform is molded into a container of a predefined shape by air blow molding, compared to the case of liquid blow, it is seen that the formability of the container can be secured only at the stretch ratio in a narrower range, and it is seen that the range of the stretch ratio when the formability can be secured is totally different from the range in the case of liquid blow molding. That is, it is seen that container molding with good formability is possible by molding the HDPE preform into a container of a predefined shape by liquid blow molding in the range of the stretch ratio, even in the range where the formability of a container cannot be secured by air blow molding.

In addition, an experiment on the HDPE preform has been conducted to investigate the influence of the stretch ratio in the axial direction and the radial direction on molding quality of the container obtained by liquid blow molding of the preform with ten different types of the stretch ratio in the axial direction (ASR) and the stretch ratio in the radial direction (HSR) from the case of Table 1. Table 2 shows its results.

**[Table 2]**

| Stretch ratio | | | HDPE |
|---|---|---|---|
| ASR | HSR | PSR | Liquid blow- |
| 1.82 | 5.07 | 9.23 | ○ |
| 2.01 | 4.16 | 8.40 | ○ |
| 2.01 | 4.29 | 8.62 | ○ |
| 2.01 | 4.53 | 9.11 | ○ |
| 2.06 | 5.75 | 11.85 | × |
| 2.22 | 4.63 | 10.28 | ○ |
| 2.27 | 4.75 | 10.78 | × |
| 2.27 | 4.86 | 11.03 | × |
| 2.27 | 4.93 | 11.19 | × |
| 2.43 | 4.25 | 10.33 | × |
| 2.51 | 5.25 | 13.18 | × |
| 2.74 | 4.59 | 12.58 | × |

Also in this experiment, the molding condition of the blow molded containers is judged based on the reduction rate of the content amount (shrinkage rate of the container after molding) and the reduction rate of the height of the container after 1 day from the molding of the container with ○ as good formability and × as bad formability and a case where the preform ruptures.

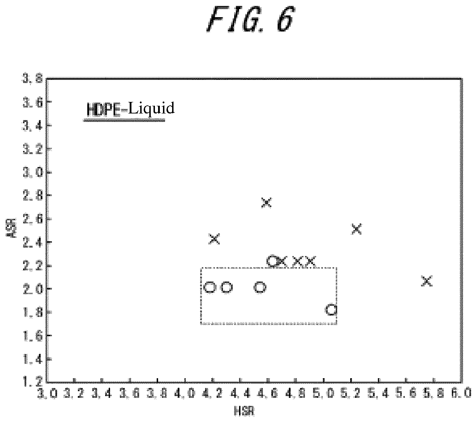

FIG. 6 is a plot diagram showing experimental results for when the high density polyethylene preform in Table 2 is molded into a container by liquid blow molding.

From the experimental results in Table 2. and FIG. 6, it is seen that when the HDPE preform is molded into a container of a predefined shape by liquid blow molding, the preform can be molded into a container with good formability by liquid blow molding by setting the stretch ratio in the axial direction and in the radial direction so that the stretch ratio in the axial direction of the body section will be 2.22 or less, and the stretch ratio in the radial direction of the body section will be not less than 4.18 and not more than 5.07.

Furthermore, in Table 2 and FIG. 6, with regard to that the stretch ratio in the axial direction of 2.27 and the stretch ratio in the radial direction of 4.75 and that the stretch ratio in the axial direction of 2.27 and the stretch ratio in the radial direction of 4.86, although the range is in the range where the stretch ratio in the axial direction of the body section (ASR) is not less than 1.69 and not more than 2.50 and the stretch ratio in the radial direction of the body section (HSR) is not less than 2.26 and not more than 5.07, good formability will not be obtained because the stretch ratio of the surface area (PSR) is 10.78 and 11.03, respectively, which is more than 10.3.

Furthermore, from the experimental results shown in Table 1 and FIG. 4, regarding the HDPE preform, although the formability of the preform cannot be judged when the stretch ratio in the axial direction of the body section is not less than 1.69 and not more than 2.50 and the stretch ratio in the radial direction of the body section is 4.5 or more, by referring to the experimental results in Table 2 and FIG. 6 in addition to the experimental results in Table 1 and FIG. 4, it is seen that when the HDPE preform is molded into a container of a predefined shape by liquid blow molding, the preform can be molded into a container with good formability by liquid blow molding by setting the stretch ratio in the axial direction and in the radial direction so that the stretch ratio in the axial direction of the body section will be not less than 1.69 and not more than 2.50 and the stretch ratio in the radial direction of the body section will be not less than 2.26 and not more than 5.07.

Needless to say, the present invention is not limited to the embodiments, and alterations can be made without departing from the gist thereof.

For example, the preform 1 is not limited to the shapes shown in FIG. 1, in the relationship between the axial dimension and radial dimension of the cavity of the mold for blow molding, as long as the body section is stretched in the range of the stretch ratio by liquid blow molding, for example, counter to the shapes shown in the FIG. 1, the preform can be various shapes such as a shape that the ratio of the axial dimension of the body section 3 to the radial dimension is small. Furthermore, it is preferable that the temperature of the liquid after molding of the preform 1, that is, of contents liquid is no more than 75°C.

### Description of the Reference Numerals

- 1: preform
- 2: opening section
- 3: body section
- 4: male screw part

## Claims

1. A preform for liquid blow molding formed into a closed-bottom cylinder provided with an opening section and a body section from polypropylene, the preform for liquid blow molding comprising:
by liquid blow molding,
the body section being molded into a container by liquid blow molding by being stretched in the axial direction at a stretch ratio of not less than 2.25 and not more than 4.34 and in the radial direction by a stretch ratio of not less than 1.95 and not more than 5.00.

2. The preform for liquid blow molding according to claim 1, wherein the body section is molded by liquid blow molding by being stretched in the radial direction by a stretch ratio of not less than 1.95 and less than 2.48.

3. The preform for liquid blow molding according to claim 1, wherein the body section is molded by liquid blow molding by being stretched in the radial direction by a stretch ratio of more than 3.70 and not more than 5.00.

4. A preform for liquid blow molding formed into a closed-bottom cylinder provided with an opening section and a body section from high density polyethylene, the preform for liquid blow molding comprising:
by liquid blow molding,
the body section being molded into a container by liquid blow molding by being stretched in the axial direction at a stretch ratio of not less than 1.69 and not more than 2.50 and in the radial direction by a stretch ratio of not less than 2.26 and not more than 5.07.

5. The preform for liquid blow molding according to claim 4, wherein the stretch ratio of the surface area by liquid blow molding is 10.3 or less.
